(19) Europäisches Patentamt
European Patent Office
Office européen des brevets

(11) **EP 2 035 821 B1**

(12) **EUROPÄISCHE PATENTSCHRIFT**

(45) Veröffentlichungstag und Bekanntmachung des Hinweises auf die Patenterteilung:
**27.08.2014 Patentblatt 2014/35**

(51) Int Cl.:
*G01N 29/024* (2006.01)     *G01N 29/32* (2006.01)
*G01F 1/66* (2006.01)

(21) Anmeldenummer: **07765679.1**

(22) Anmeldetag: **27.06.2007**

(86) Internationale Anmeldenummer:
**PCT/EP2007/056439**

(87) Internationale Veröffentlichungsnummer:
**WO 2008/003627 (10.01.2008 Gazette 2008/02)**

(54) **Verwendung einer Vorrichtung in einer Anlage zur Erzeugung von Biogas und Verfahren zur Ultraschallbestimmung der Konzentrationen von Komponenten eines Biogasgemisches**

Use of an apparatus in a production facility for biogas and method for the ultrasonic determination of the concentrations of components in a biogas mixture

Utilisation d'un dispositif dans usine de production de biogas et procédé de détermination ultrasonore des concentrations de constituants d'un mélange gazeux de biogaz.

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **03.07.2006 DE 102006030964**

(43) Veröffentlichungstag der Anmeldung:
**18.03.2009 Patentblatt 2009/12**

(73) Patentinhaber: **Endress + Hauser Flowtec AG**
**4153 Reinach (CH)**

(72) Erfinder: **JACOBSON, Saul**
**South Hobart**
**TAS 7004 (AU)**

(74) Vertreter: **Andres, Angelika Maria**
**Endress+Hauser (Deutschland) AG+Co. KG**
**PatServe**
**Colmarer Strasse 6**
**79576 Weil am Rhein (DE)**

(56) Entgegenhaltungen:
WO-A-01/08554     JP-A- 2004 325 297
US-A- 5 392 635     US-A1- 2004 195 531

**Beschreibung**

Die Erfindung bezieht sich auf eine Verwendung einer Vorrichtung in einer Anlage zur Erzeugung von Biogas und ein Verfahren zur Bestimmung der Konzentrationen und/oder des Durchflusses von einzelnen Komponenten eines Gasgemisches, wobei das Gasgemisch durch eine Rohrleitung bzw. durch ein Messrohr strömt und wobei es sich bei dem Gasgemisch (2) um ein Biogas handelt. Dabei besteht das Gasgemisch, das von der erfindungsgemäß verwendeten Vorrichtung bzw. mittels des erfindungsgemäßen Verfahrens analysiert wird, aus drei Komponenten, wobei üblicherweise Spuren weiterer Gase mit einer Konzentration von kleiner als einem Volumenprozent vorhanden sein können.

Die erfindungsgemäße Anwendung ist der Einsatz der Vorrichtung bzw. des erfindungsgemäßen Verfahrens in einer Biogas-Anlage. Biogas beseht im wesentlichen aus den drei Komponenten: Methan, Kohlendioxid und Wasserdampf. Darüber hinaus sind in dem Biogas Spuren von Sauerstoff, Wasserstoff, Schwefelwasserstoff und Ammoniak zu finden.

Üblicherweise kommt bei der Messung des Durchflusses von Gasgemischen durch eine Rohrleitung ein thermisches Durchflussmessgerät zum Einsatz. Um eine möglichst genaue Messung durchführen zu können, muss die Zusammensetzung des Gasgemisches bekannt sein. Hierzu ist neben dem thermischen Durchflussmessgerät ein Gasanalysator vorgesehen. Die entsprechende Gasanalyse erfolgt offline, d.h. dass eine Gasprobe wird zwecks Analyse aus dem Gasgemisch entnommen, in den Gasanalysator eingefüllt und dort anschließend analysiert. Vor Durchführung einer nachfolgenden Analyse muss der Analysator gereinigt werden. Es versteht sich von selbst, dass diese bekannte Methode im Hinblick auf die Anschaffungs- und Betriebskosten relativ kostenintensiv ist.

Anstelle eines thermischen Durchflussmessgeräts kann auch ein Vortex-Durchflussmessgerät eingesetzt werden. Allerdings ist der Einsatz auf Anwendungen beschränkt, bei denen ein hoher Durchfluss vorliegt, da Vortex-Durchflussmessgeräte im Bereich kleiner Durchflüsse große Messfehler haben. Daher ist der Einsatz von Vortex-Durchflussmessgeräten in Biogas-Anlagen, wo das Biogas üblicherweise einen geringen Durchfluss aufweist, wenig sinnvoll. Ähnliches gilt auch für den Einsatz von Differenzdruck-Durchflussmessgeräten: Ihr Einsatz in Biogas-Anlagen ist insofern kritisch, als der Druck im Fermenter vergleichbar ist mit dem Umgebungsdruck. Bei beiden Typen von Durchflussmessgeräten ist ebenso wie beim Einsatz eines thermischen Durchflussmessgeräts ein separater Gasanalysator vorzusehen. Wie bereits gesagt, erhöht dieser zusätzliche und offline betriebene Analysator den Arbeitsaufwand, die Anschaffungs- und die Betriebskosten.

Die Druckschrift JP 2004 325297 A offenbart eine Vorrichtung zum Messen einer Konzentration eines Gases in einem Gasgemisch mit drei Komponenten, wobei eine Komponente Wasserdampf ist. Dazu ist ein Wasserbehälter vorgesehen, um die Konzentration des Wasserdampfs im Gasgemisch gesättigt zu halten. Des Weiteren sind ein Drucksensor, ein Temperatursensor und eine Ultraschall-Sensoranordnung vorgeschlagen. Diese messen Druck, Temperatur und Schallgeschwindigkeit des Gasgemischs.

In Druckschrift WO 01/08554 A ist eine Vorrichtung zur Messung von Stoffwechselwerten einer Person offenbart. Dazu werdenj mittels eines Drucksensors, eines Temperatursensors, einer Feuchtemesseinheit und einer Ultraschall-Sensoranordnung der Druck, die Temperatur, die relative Feuchte und die Schallgeschwindigkeit eines Gasgemischs gemessen. Das Gasgemisch besteht dabei aus mindestens vier Komponenten, wie auf Seite 40 der WO 01/8554 A zu entnehmen ist, wobei zumindest Sauerstoff, Stickstoff und Kohlendioxid im Gasgemisch vorliegen.

Aus der US-PS 5,392,635 ist eine akustische Zelle zur Analyse eines zweikomponentigen Gasgemisches bekannt geworden, wobei die Zelle auf der Basis der Laufzeitdifferenz von Schallsignalen arbeitet. Bei dieser bekannten Lösung wird mittels in das Gasgemisch eingestrahlter Schallsignale die Schallgeschwindigkeit des Gasgemisches bestimmt. Da die Schallgeschwindigkeit des Gasgemisches u.a. vom Molekulargewicht der beiden Komponenten abhängt, ist es möglich, den Volumenanteil bzw. die Konzentration jeder der beiden Komponenten in guter Näherung über die ideale Gasgleichung zu ermitteln.

Die aus dem Stand der Technik bekannte akustische Zelle hat den Nachteil, dass mit ihr nur zweikomponentige Gasgemische analysiert werden können. In typischen zu analysierenden Gasgemischen sind jedoch oftmals mehr als zwei Komponenten in relativ großen Konzentrationen vorhanden. Bleiben diese Komponenten unberücksichtigt, so ist der Messfehler entsprechend groß.

Der Erfindung liegt die Aufgabe zugrunde, die Verwendung einer Vorrichtung in einer Anlage zur Erzeugung von Biogas und ein Verfahren zur präzisen Bestimmung der Konzentration der einzelnen Komponenten eines Gasgemisches mit mehr als zwei Komponenten vorzuschlagen.

Die Aufgabe wird dadurch gelöst, dass eine Vorrichtung in einer Anlage zur Erzeugung von Biogas verwendet wird in der ein Ultraschall-Durchflussmessgerät vorgesehen ist, das die Schallgeschwindigkeit des in einer Rohrleitung strömenden Gasgemisches bestimmt, dass eine Temperaturmesseinheit vorgesehen ist, die die Temperatur des in der Rohrleitung strömenden Gasgemisches bestimmt, und dass eine Auswerteeinheit vorgesehen ist, die anhand der über eine Ultraschallmessung ermittelten Schallgeschwindigkeit und anhand der Schallgeschwindigkeit, die sich durch Auswertung der idealen Gasgleichung ergibt, die Konzentrationen der einzelnen Komponenten des Gasgemisches bestimmt, wobei die Auswerteeinheit die Konzentration des Wasserdampfs in Abhängigkeit von der Temperatur und der Luftfeuchte des Gasgemisches ermittelt und die Konzentration des Wasserdampfes bei der Bestimmung der Konzentrationen der beiden weiteren Komponenten berück-sichtigt. Wie zuvorgesagt, wird die Schallgeschwindigkeit bevorzugt durch Lösung der idealen Gasgleichung ermittelt. Zur Erhöhung der Messgenauig-keit ist es alternativ möglich, diese Information anhand experimentell ermittelter Daten zu erhalten. Im Zusammenhang mit der Erfindung ist vorgesehen, dass es sich bei dem Gasgemisch um ein Biogas handelt, das im wesentlichen aus dem Komponenten Methan, Kohlendioxid und Wasserdampf besteht.

Gemäß einer vorteilhaften Ausgestaltung der erfindungsgemäßen Verwendung wird vorgeschlagen, dass die Auswerteeinheit die Konzentration des Wasserdampfes in Abhängigkeit von der Temperatur unter der Annahme einer relativen Luftfeuchte von 100% ermittelt.

Die oben getroffene Annahme, einer Sättigung des Gasgemisches mit Wasserdampf ist in vielen Fällen zumindest näherungsweise korrekt. Insbesondere gilt dies für Biogas, das üblicherweise bei einer Temperatur von 37° C erzeugt wird. Allerdings liefert diese Näherung nicht in jedem Fall ein korrektes Ergebnis: Um den eventuell auftretenden Fehler bei der Bestimmung der Konzentration des Wasserdampfes zu minimieren, ist gemäß einer vorteilhaften Weiterbildung der erfindungsgemäß verwendeten Vorrichtung eine Feuchtemesseinheit vorgesehen, die die relative Luftfeuchte des in der Rohrleitung strömenden Gasgemisches misst; anschließend bestimmt die Auswerteeinheit die Konzentration bzw. den Volumenanteil des Wasserdampfes in Abhängigkeit von der Temperatur und der gemessenen relativen Luftfeuchte.

Da auch der Druck des in der Rohrleitung strömenden Gasgemisches einen Einfluss auf die Konzentration des Wasserdampfs in dem Gasgemisch hat, ist gemäß einer Weiterbildung der erfindungsgemäß verwendeten Vorrichtung ein Drucksensor vorgesehen, der den Absolutdruck des in der Rohrleitung strömenden Gasgemisches bestimmt; die Auswerteeinheit berücksichtigt den gemessenen Absolutdruck bei der Bestimmung der Konzentration des Wasserdampfes in dem Gasgemisch.

In einer bevorzugten Anwendung der erfindungsgemäß verwendeten Vorrichtung handelt es sich bei der Rohrleitung um ein Ableitrohr für Biogas, wobei das Ableitrohr im oberen Bereich eines Fermenters, in dem sich Biomaterial befindet, angeordnet ist.

Um die Effektivität einer Biogas-Anlage zu ermitteln und zu überwachen, ist es notwendig, den aktuellen Durchfluss und die aktuelle Konzentration der wesentlichen Komponenten des Biogases zu kennen. So bestimmt der Prozentanteil von Methan in dem Gasgemisch den Energiegehalt des Biogases, während der Anteil des Methans in dem Biogas verknüpft mit dem Durchfluss eine Größe ist, die die Energieerzeugung bzw. den Energiegewinn der Biogas-Anlage charakterisiert. Weiterhin ist das Verhältnis von Methan zu Kohlendioxid eine wichtige Regelgröße für den in dem Fermenter ablaufenden Prozess; dieses Verhältnis kann beispielsweise zur Steuerung der Prozess-Temperatur und/oder zur Steuerung der Beschickung des Fermenters mit neuem Biomaterial verwendet werden. Weiterhin ist die Überwachung des Anteils von Kohlendioxid in dem Biogas aufgrund bestehender Umweltschutz-Bestimmungen von großer Wichtigkeit.

Gemäß einer bevorzugen Ausgestaltung des erfindungsgemäßen Verfahren ist das Ultraschall-Durchflussmessgerät so ausgestaltet, dass es die Strömungsgeschwindigkeit bzw. den Volumendurchfluss des in der Rohrleitung strömenden Gases nach dem Doppler- oder nach dem Laufzeitdifferenz-Prinzip ermittelt. Bei dem Ultraschall-Durchflussmessgerät handelt es sich entweder um ein Inline-Durchflussmessgerät oder um ein Clamp-On Durchflussmessgerät.

Ultraschall-Durchflussmessgeräte, die nach der Laufzeitdifferenz-Prinzip arbeiten, weisen zumindest ein Paar von Ultraschallsensoren auf, die die Ultraschall-Messsignale entlang definierter Schallpfade durch das in der Rohrleitung strömende Gasgemisch alternierend aussenden und/oder empfangen. Eine Regel-/Auswerteeinheit ermittelt den Volumen- und/oder den Massedurchfluss des Gasgemisches anhand der Differenz der Laufzeiten der Messsignale in Strömungsrichtung und entgegen der Strömungsrichtung des Gasgemisches. Der wesentliche Vorteil der erfindungsgemäß verwendeten Vorrichtung ist darin zu sehen, dass die Information über den Durchfluss und die Zusammensetzung des im wesentlichen aus drei Komponenten zusammengesetzten Biogases inline und kontinuierlich bereitgestellt werden kann.

Bei Inline-Durchflussmessgeräten sind die Ultraschallsensoren fest in entsprechenden Ausnehmungen in der Wandung eines Messrohrs integriert. Zwecks Montage wird das Messrohr mittels Flanschen in die Rohrleitung eingesetzt. Bei Clamp-On-Durchflussmessgeräten werden die Ultraschallsensoren von außen auf die Rohrleitung montiert; sie messen den Volumen- bzw. Massedurchfluss des Gasgemisches in der Rohrleitung durch die Rohrwand hindurch.

Ultraschall-Durchflussmessgeräte der zuvor beschriebenen Art, die den Volumen- oder den Massedurchfluss ermitteln, werden vielfach in der Prozess- und Automatisierungstechnik eingesetzt. Clamp-On-Durchflussmessgeräte haben den Vorteil, dass sie es ermöglichen, den Volumen- oder Massedurchfluss in einem Behältnis, z.B. in einer Rohrleitung, ohne Kontakt mit dem Medium zu bestimmen. Clamp-On-Durchflussmessgeräte sind beispielsweise in der EP 0 686 255 B1, der US-PS 4,484,478, DE 43 35 369 C1, DE 298 03 911 U1, DE 4336370 C1 oder der US-PS 4,598,593 beschrieben.

Bei beiden Typen von Ultraschall-Durchflussmessgeräten werden die Ultraschall-Messsignale unter einem vorgegebenen Winkel in die Rohrleitung, in der das fluide Medium strömt, eingestrahlt bzw. aus der Rohrleitung ausgestrahlt. Bei Ultraschall-Durchflussmessgeräten ist die jeweilige Position der Ultraschallwandler am Messrohr (Inline) bzw. an der Rohrleitung (Clamp-On) abhängig vom Innendurchmesser des Messrohres und von der Schallgeschwindigkeit des Mediums. Bei Clamp-On-Durchflussmessgeräten müssen zusätzlich die Applikationsparameter: Wandstärke der Rohrleitung und Schallgeschwindigkeit des Materials der Rohrleitung berücksichtigt werden.

Üblicherweise sind bei beiden Typen von Ultraschall-Durchflussmessgeräten die Ultraschallsensoren so angeordnet, dass die Schallpfade durch den Zentralbereich der Rohrleitung bzw. des Messrohres geführt sind. Der ermittelte Volumen- oder Massedurchfluss spiegelt somit den mittleren Durchfluss des Mediums durch die Rohrleitung. Bei vielen Anwendungen, insbesondere bei Durchflussmessungen in Rohrleitungen mit großen Nennweiten, ist diese Mittelung jedoch zu ungenau. Aus dem Stand der Technik ist es bekannt geworden, mehrere Sensorpaare über den Umfang verteilt an dem Messrohr bzw. an der Rohrleitung vorzusehen, wodurch die Durchflussinformation aus verschiedenen segmentierten Winkelbereichen des Messrohres bzw. der Rohrleitung zur Verfügung steht.

Die wesentliche Komponente eines Ultraschallsensors ist ein piezoelektrisches Element. Die wesentliche Komponente eines piezoelektrischen Elements ist eine piezokeramische Schicht, bei der es sich um eine Folie oder um eine Membran handelt. Die Piezokeramik ist zumindest in einem Teilbereich metallisiert. Durch Anlegen eines elektrischen Anregungssignals wird die piezoelektrische Schicht in Resonanzschwingung versetzt, und Ultraschall-Messsignale werden ausgesendet. Bei dem empfangenden Ultraschallsensor werden die Ultraschall-Messsignale in ein elektrisches Signal umgesetzt.

Gemäß einer vorteilhaften Ausgestaltung der erfindungsgemäß verwendeten Vorrichtung ermittelt die Auswerteeinheit anhand der zuvor bestimmten Konzentrationen und der Molekulargewichte der einzelnen Komponenten des Gasgemisches bzw. des Biogases und anhand der ermittelten Strömungsgeschwindigkeit den Volumen- oder Massedurchfluss von zumindest einer der Komponenten des Gasgemisches bzw. des Biogases.

Bevorzugt ermittelt die Auswerteeinheit den Energiefluss bzw. die Energieproduktion des Biogases unter Berücksichtigung der ermittelten Konzentrationen der einzelnen Komponenten und dem Volumendurchfluss des Biogases in der Rohrleitung.

Weiterhin ist eine Anzeigeeinheit vorgesehen, die eine Meldung ausgibt, wenn der Energiefluss bzw. die Energieproduktion des Biogases einen vorgegebenen minimalen Grenzwert unterschreitet.

Eine besonders vorteilhafte Ausgestaltung der erfindungsgemäß verwendeten Vorrichtung sieht eine Steuer-/Regeleinheit vor, die die Temperatur des Fermenters und/oder die Beschickung des Fermenters mit Füllmaterial so steuert, dass der Energiefluss bzw. die Energieproduktion des Biogases einen im wesentlichen konstanten Wert annimmt. Hierdurch lässt sich der Ablauf des Fermentationsprozesses optimieren. Bevorzugt werden zu diesem Zweck die bereits an vorhergehender Stelle genannten Regelgrößen verwendet.

Besteht die Anlage zur Erzeugung von Biogas aus einer Vielzahl von Fermentern, so sieht eine bevorzugte Ausgestaltung der erfindungsgemäß verwendeten Vorrichtung vor, dass die Steuer-/Regeleinheit die Temperatur von jedem einzelnen Fermenter und/oder die Beschickung jeden einzelnen Fermenters mit Füllmaterial derart steuert, dass der Energiefluss bzw. die Energie-produktion des von der Anlage erzeugten Biogases einen im wesentlichen konstanten Wert annimmt. Hierdurch wird gleichfalls eine Optimierung des Prozessablaufs erreicht.

Bezüglich des Verfahrens wird die Aufgabe dadurch gelöst, dass die Schallgeschwindigkeit des in einer Rohrleitung strömenden Gasgemisches über ein Ultraschall-Messverfahren bestimmt wird, dass die Temperatur des in der Rohrleitung strömenden Gasgemisches bestimmt wird, dass die Konzentration des Wasserdampfs in Abhängigkeit von der Temperatur bei der in der Rohrleitung herrschenden Luftfeuchte ermittelt wird, und dass anhand der über das Ultraschall-Messverfahren ermittelten Schallgeschwindigkeit und anhand der Schallgeschwindigkeit, die sich durch Auswertung der idealen Gasgleichung ergibt, die Konzentrationen der Komponenten der beiden weiteren Komponenten des Gasgemischs bestimmt werden.

Eine bevorzugte Ausgestaltung des erfindungsgemäßen Verfahrens sieht vor, dass der Energiefluss bzw. die Energieproduktion des Gasgemisches unter Berücksichtigung der Konzentrationen der einzelnen Komponenten und des Volumen- oder Massedurchflusses durch die Rohrleitung bestimmt wird.

Die Erfindung wird anhand der nachfolgenden Figuren näher erläutert. Es zeigt:

Fig. 1: einen Längsschnitt durch eine erste Ausführungsform eines Ultraschall-Durchflussmessgeräts der erfindungsgemäß verwendeten Vorrichtung,

Fig. 2: einen Längsschnitt durch eine zweite Ausführungsform des Ultraschall-Durchflussmessgeräts

Fig. 3: einen Längsschnitt durch einen Ultraschallsensor, der in Verbindung mit der in Fig. 1 gezeigten Ausführungsform eingesetzt wird,

Fig. 4: einen Längsschnitt der in Fig. 2 gezeigten Ausgestaltung eines Temperatur- und Feuchtesensors,

EP 2 035 821 B1

Fig. 5: eine Darstellung des in Fig. 2 gezeigten Ultraschall-Durchflussmessgeräts mit Regel-/Auswerteschaltung und

Fig. 6: eine schematische Darstellung der Anordnung der erfindungsgemäß verwendeten Vorrichtung an einem Fermenter.

Der Einsatz von Ultraschall-Durchflussmessgeräten 21 zur Bestimmung des Volumen- oder Massedurchflusses Q eines gasförmigen oder flüssigen Mediums durch eine Rohrleitung 1 auf der Basis des Laufzeitdifferenzprinzips ist allgemein bekannt. Als Referenz sei auf das von T. Stauss herausgegebene Handbuch (ISBN 3-9520220-4-7) verwiesen. Ausführliche Information findet sich auch in dem von der von der Anmelderin herausgegebenen 'Durchfluss-Fibel'. Darüber hinaus werden von der Anmelderin Ultraschall-Durchflussmessgeräte unter der Bezeichnung PROSONIC FLOW angeboten und vertrieben.

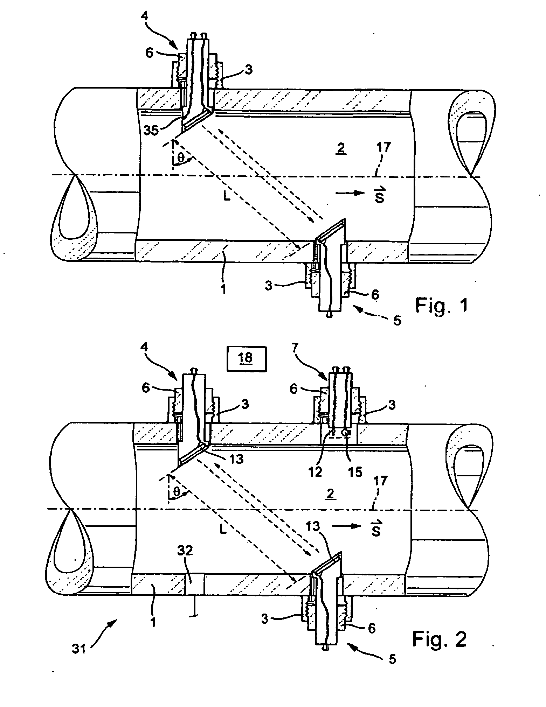

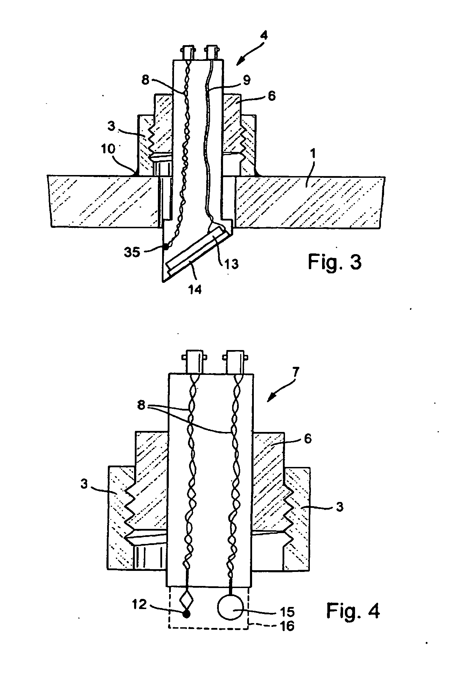

Die Figuren Fig. 1 und Fig. 2 zeigen zwei unterschiedliche Ausgestaltungen der erfindungsgemäß verwendeten Vorrichtung, bei der ein Ultraschall-Durchflussmessgerät 31 zur Analyse und zur Durchflussmessung eines Gasgemisches 2 verwendet wird. In Fig. 3 ist in Detaildarstellung der Ultraschallsensor mit integriertem Temperatursensor 4 aus Fig. 1 zu sehen. Fig. 4 zeigt in Detail-Darstellung den Temperatur-/ Feuchtesensor 7 aus Fig. 2.

Bei den beiden Ausgestaltungen sind zur Bestimmung des Volumenstroms Q nach dem Laufzeitdifferenz-Prinzip zwei Ultraschallsensoren 4, 5 vorgesehen, wobei die beiden Ultraschallsensoren 4, 5 gegenüberliegend und axial zueinander versetzt an der Rohrleitung 1 oder an dem Messrohr befestigt sind. Alternierend senden und empfangen die beiden Ultraschallsensoren 4, 5 Ultraschall-Messsignale. Die Laufzeitdifferenz zwischen den Ultraschall-Messsignalen, die in Strömungsrichtung S und entgegen der Strömungrichtung S ausgesendet und empfangen werden, ist ein Maß für den Volumenstrom Q des Gasgemisches 2 in der Rohrleitung 1.

Der wesentliche Unterschied bei den beiden in den Figuren Fig. 1 und Fig. 2 gezeigten Ausgestaltungen besteht darin, dass bei der in Fig. 1 gezeigten Ausgestaltung davon ausgegangen wird, dass die relative Luftfeuchte RH des Gasgemisches 100 % beträgt. Somit ist die Konzentration des Wasserdampfs in dem Gasgemisch 2 nur abhängig von der Temperatur T und der entsprechende Sättigungs-Dampfdruck kann einer Tabelle entnommen oder über eine entsprechende Formel gewonnen werden.

Um eine genauere Aussage hinsichtlich der Wasserdampf-Konzentration $x_w$ zu erhalten, ist vorteilhafter Weise ein Drucksensor 32 vorgesehen. Anhand des gemessenen, eventuell vom Normaldruck abweichenden Drucks des Gasgemisches 2 in der Rohrleitung 1 lässt sich die Konzentration des Wasserdampfs $x_w$ in dem Gasgernisch 2 exakt bestimmen.

Bei der in Fig. 2 gezeigten Ausgestaltung ist zusätzlich zu dem Temperatursensor 7 und ggf. dem Drucksensor 32 ein Luftfeuchtesensor 15 vorgesehen. Der Luftfeuchtesensor 15 stellt einen Messwert hinsichtlich der aktuellen Luftfeuchte RH in dem Gasgemisch 2 zur Verfügung. Somit lässt sich die Wasserdampf-Konzentration $x_w$ in dem Gasgemisch 2 hochgenau bestimmen. Üblicherweise ist der Luftfeuchtesensor 15 als kapazitiver Sensor ausgestaltet. Die Fritte 16 schützt den Luftfeuchte- und Temperatursensor 7 vor mechanischer Zerstörung; sie verhindert die Kollision mit größeren Partikeln.

In Fig. 1 und in der in Fig. 3 gezeigten Detailansicht ist dargestellt, dass der Temperatursensor 35 in einem der beiden Ultraschallsensoren 4 integriert ist. Bei dem Temperatursensor 35 handelt es sich beispielsweise um ein RTD Element, einen Thermistor, ein Thermoelement oder um ein temperaturempfindliches Halbleiterelement. Der Temperatursensor 35 ist so in den Ultraschallsensor 4 integriert, dass er die Temperatur T des Gasgemisches 2 misst.

Der Ultraschallsensor 4 besteht aus einem piezoelektrischen Element 13 und einer Anpassschicht 14, wobei die Anpassschicht 14 die Ein- und Auskopplung der Ultraschall-Messsignale in das Gasgemisch 2 verbessert. Bevorzugt hat die Anpassschicht 14 eine Dicke, die einem Viertel der Wellenlänge der Ultraschall-Messsignale entspricht. Die Anpassschicht 14 ist so ausgestaltet, dass ihre akustische Impedanz zwischen der akustischen Impedanz des piezoelektrischen Elements 13 und der akustischen Impedanz des Gasgemisches 2 liegt.

Die Strömungsgeschwindigkeit V des Gasgemisches 2 lässt sich anhand des Laufzeitdifferenz-Prinzips nach folgender Formel berechnen:

$$V = K \frac{L}{2\sin\theta} \cdot \frac{t_{up} - t_{dn}}{t_{up} \cdot t_{dn}} \qquad \text{-----------Gleichung (1a)}$$

Der Volumenstrom Q ergibt sich folglich aus der mathematischen Beziehung:

$$Q = A \cdot V \qquad \text{-----------Gleichung(1b)}$$

Hierbei charakterisieren

$t_{up}$: die Laufzeit der Ultraschall-Messsignale in Strömungsrichtung S;

$t_{dn}$: die Laufzeit der Ultraschall-Messsignale entgegen der Strömungsrichtung S;

K: eine das Strömungsprofil beschreibende Funktion - bei laminarer Strömung hat das Strömungsprofil üblicherweise die Form einer Parabel;

L: der Abstand zwischen den beiden Ultraschallsensoren 4, 5 bzw. die Länge des Schallpfades der Ultaschall-Messsignale zwischen den beiden Ultraschallsensoren 4, 5;

θ: der Einkoppelwinkel der Ultraschall-Messsignale in die Rohrleitung 1 bzw. in das Messrohr, wobei der Einkoppelwinkel gleich dem Auskoppelwinkel ist.

A: die Querschnittsfläche der Rohrleitung 1, die von dem Gasgemisch 2 durchströmt wird.

Die Schallgeschwindigkeit $C_8$ des in der Rohrleitung 1 bzw. in dem Messrohr strömenden Mediums 2 lässt sich nach folgender Formel errechnen:

$$C_g = \frac{L}{2}\left[\frac{1}{t_{up}} + \frac{1}{t_{dn}}\right] \qquad \text{-----------Gleichung (2)}$$

Die Schallgeschwindigkeit des Mediums 2 lässt sich darüber hinaus über die folgende Gleichung, die sog. Ideale Gasgleichung, berechnen:

$$C_g = \sqrt{\frac{\gamma R T}{M}} \qquad \text{------------------Gleichung (3)}$$

Hierbei charakterisiert:

$\gamma$ : das spezifische Wärmekapazitätsverhältnis des in der Rohleitung 1 strömenden Gases;
$R$: die universelle Gaskonstante (R = 8.3143 J/mol K);
$T$: die absolute Temperatur in Kelvin;
$M$ : das Molekulargewicht des Gasgemisches in Kilogramm.

Die Schallgeschwindigkeit $C_g$ eines aus drei Komponenten zusammengesetzten Gasgemisches lässt sich unter der Näherung, dass es sich bei dem Gasgemisch um ein ideales Gas handelt, folgendermaßen beschreiben:

$$C_g = \sqrt{\frac{\gamma R T}{M}} \qquad \text{-----------Gleichung (4)}$$

mit

$$\overline{\gamma} = 1 + \left[ \frac{x_1}{\gamma_1 - 1} + \frac{x_2}{\gamma_2 - 1} + \frac{x_3}{\gamma_3 - 1} \right]^{-1} \qquad \text{----------Gleichung (5)}$$

und

$$\overline{M} = x_1 M_1 + x_2 M_2 + x_3 M_3 \qquad \text{--------Gleichung (6)}$$

Hierbei charakterisieren:

$\gamma_1, \gamma_2, \gamma_3$: die spezifischen Wärmekapazitätsverhältnisse der drei Komponenten des Gasgemisches,
$M_1, M_2, M_3$ : die Molekulargewichte der drei Komponenten des Gasgemisches,
$x_1, x_2, x_3$: die Konzentrationen oder Molanteile der drei Komponenten des Gasgemisches 2, wobei definitionsgemäß zumindest näherungsweise die folgende Beziehung erfüllt ist:

$$x_1 + x_2 + x_3 = 1 \qquad \text{--------------Gleichung (7)}$$

In einer Näherung wird im Zusammenhang mit der Erfindung die Annahme getroffen, dass der Wasserdampf in dem Gasgemisch 2 gesättigt ist, d.h. dass die relative Luftfeuchte RH 100% beträgt. Somit kann die Konzentration von Wasserdampf $x_w = x_3$ mittels einer Tabelle oder einer entsprechenden Formel bestimmt werden, in der der Wasserdampfgehalt bzw. die Volumenprozent des Wasserdampfs in Abhängigkeit von der Temperatur T bei Normaldruck P aufgelistet bzw. berechenbar sind.

| Temperatur °in Grad C | Sättigungs-Dampfdruck Ps in mb | Volumenprozent bei Normaldruck (1013 mb) in % |
|---|---|---|
| -10 | 2.86 | 0.3 |
| 0 | 6.11 | 0.6 |
| 10 | 12.2 | 1.2 |
| 20 | 23.3 | 2.3 |
| 30 | 42.3 | 4.2 |
| 40 | 73.5 | 7.3 |
| 50 | 122.9 | 12 |
| 60 | 198.4 | 20 |
| 70 | 310.6 | 31% |
| 80 | 472.7 | 47% |
| 90 | 701.2 | 69% |
| 100 | 1013 | 100% |

Ist die Temperatur bekannt, so kann die Konzentration des Wasserdampfs $x_w$ nach folgender Formel berechnet werden:

$$x_w = \frac{P_s}{P_T} \qquad \text{----------------Gleichung (8)}$$

Hierbei kennzeichnet:

$P_s$= den Sättigungsdampfdruck in Abhängigkeit von der Temperatur bei Normaldruck;
$P_T$= den Absolutdruck der in vielen Anwendungen dem Normaldruck (1013 mb) entspricht.

Ist der Wasserdampf in dem Gasgemisch nicht gesättigt, so ist es für eine genaue Messung erforderlich, die relative Luftfeuchte RH zu bestimmen. Eine Anordnung zur Luftfeuchtebestimmung ist im Detail in Fig. 4 zu sehen, wo der Luftfeuchtesensor 15 zusammen mit dem Temperatursensor 12 als kombinierter Temperatur- und Luftfeuchtesensor 7 ausgestaltet ist. Die Konzentration des Wasserdampfs $x_w$ lässt sich mit Kenntnis der aktuellen Luftfeuchte RH nach folgender Formel berechnen:

$$x_w = \frac{P_s \cdot RH}{P_T} \qquad \text{----------Gleichung (9)}$$

Kombiniert man die Gleichungen (4), (5), (6) und (7) und ersetzt man $x_w$, $M_w$ und $\gamma_w$ durch $x_3$, $M_3$, and $\gamma_3$ so ergibt sich für die Konzentration der ersten Komponente des Gasgemisches $x_1$ die quadratische Gleichung:

$$\left[ \frac{C_g^2}{RT} k_1 k_2 \right] x_1^2 + \left[ \frac{C_g^2}{RT} (k_2 k_4 + k_1 k_3) - k_1 \right] x_1 + \left[ \frac{C_g^2}{RT} k_3 k_4 - k_4 - 1 \right] = 0$$

$$\text{------Gleichung (10)}$$

mit

$$k_1 = \frac{1}{\gamma_1 - 1} - \frac{1}{\gamma_2 - 1}$$

$$k_2 = M_1 - M_2$$

$$k_3 = (1 - x_w) M_2 + x_w M_w$$

$$k_4 = \frac{1 - x_w}{\gamma_2 - 1} + \frac{x_w}{\gamma_w - 1}$$

$C_g$ ist bekannt aus Gleichung (2), und $x_w$ ist bekannt durch die Gleichung (8) oder die Gleichung (9). Ebenfalls bekannt sind die spezifischen Wärmekapazitätsverhältnisse und die Molekulargewischte der drei Komponenten des Gasgemisches 2. Somit ist die quadratische Gleichung (10) lösbar.

Ist die Konzentration der ersten Komponente $x_1$ und die Konzentration des Wasserdampfs $x_w$ bekannt, so lässt sich die Konzentration der zweiten Komponente $x_2$ in einfacher Weise aus Gleichung (7) errechnen:

$$x_2 = 1 - (x_1 + x_w) \qquad \text{-----------Gleichung (11)}$$

Somit lassen sich die Volumenanteile bzw. die Molanteile der drei Komponenten des Gasgemisches 2 bestimmen. Durch Kombination des Volumen- bzw. Molanteils mit der Strömungsgeschwindigkeit V des Gasgemisches 2, siehe hierzu Gleichung (1), lässt sich der Volumen- oder der Massedurchfluss $Q_1$, $Q_2$, $Q_3$ jeder einzelnen Komponente des Gasgemisches 2 bestimmen. Folglich ist auch der Volumen- bzw. der Massedurchfluss Q des Gasgemisches 2 durch die Rohrleitung 1 mit ausreichend hoher Genauigkeit bekannt.

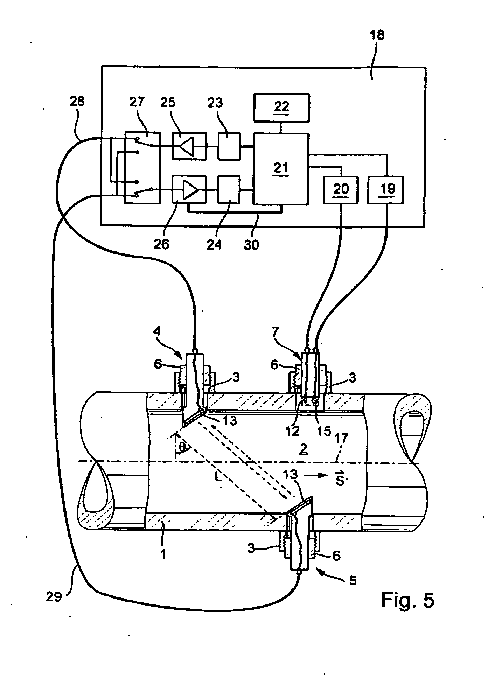

Fig. 5 zeigt die in Fig. 2 gezeigte Ausgestaltung der erfindungsgemäß verwendeten Vorrichtung mit zugehöriger Regel-/Auswerteschaltung 18. Üblicherweise ist die Regel-/Auswerteschaltung 18 in den sog. Transmitter des Durchfluss-messgeräts 31 integriert.

Die beiden Ultraschallsensoren 4, 5 arbeiten abwechselnd als Sender und Empfänger. Die Ansteuerung der Ultraschallsensoren 4, 5 erfolgt über den Multiplexer 27. In Fig. 5 ist der Fall dargestellt, dass der Ultraschallsensor 4 als Sender und der Ultraschallsensor 5 als Empfänger arbeitet. Über den Generator 23 und den Sendeverstärker 25 wird ein elektrisches Anregungssignal an das piezoelektrische Element 13 des Ultraschallsensors 4 angelegt. Die Anregung des piezoelektrischen Elements 13 erfolgt bei dessen Resonanzfrequenz. Der Ultraschallsensor 4 wird so angesteuert, dass er ein kurzes impulsförmige Ultraschall-Messsignal aussendet. Die optimale Frequenz eines Ultraschall-Messsignals liegt im Bereich zwischen 50 kHz und 500 kHz.

Nach einer kurzen Laufzeit empfängt der Ultraschallsensor 5 den Schallimpuls. Das piezoelektrische Element 13 des Ultraschallsensors 5 wandelt den Schallimpuls in ein elektrisches Signal; dieses elektrische Signal wird zum Empfangsverstärker 26 geführt. Die gewünschte Verstärkung wird über einen Rückkoppelkreis 30 geregelt. Das verstärkte Empfangssignal wird über einen Analog-/Digital Wandler 24 in eine digitales Signal umgewandelt und der Auswerteeinheit 21 zur weiteren Bearbeitung und Auswertung zur Verfügung gestellt. Die Auswerteeinheit 21 errechnet die Laufzeit $t_{dn}$ des Schallimpulses auf dem Schallpfad vom Ultraschallsensor 4 zum Ultraschallsensor 5.

Anschließend werden die Ultraschallsensoren über den Multiplexer 27 so angesteuert, dass nunmehr der Ultraschallsensor 5 als Sender und der Ultraschallsensor 4 als Empfänger arbeitet. In der zuvor beschriebenen Weise ermittelt die Auswerteeinheit 21 die Laufzeit $t_{up}$, die der Schallimpuls benötigt, um den Schallpfad zwischen dem Ultraschallsensor 5 und dem Ultraschallsensor 5 zu durchlaufen.

In einer der Auswerteeinheit 21 zugeordneten Speichereinheit ist Information über die Funktion K abgespeichert, die das Strömungsprofil bzw. die Geometrie des Messrohrs bzw. der Rohrleitung 1 in Abhängigkeit von der Strömungsgeschwindigkeit V zumindest in einer Vielzahl der Anwendungsfälle hinreichend genau beschreibt. Wie bereits an vorhergehender Stelle erwähnt, lässt sich die Funktion K auch messtechnisch bestimmen. Hierzu ist es erforderlich, dass mehr als ein Paar von Ultraschallsensoren 4, 5 an dem Messrohr bzw. an der Rohrleitung 1 vorgesehen sind.

Anhand der gemessenen Laufzeiten $t_{dn}$, $t_{up}$ - ggf. gemittelt über mehrere Messzyklen - und anhand der abgespeicherten, das Strömungsprofil beschreibenden Funktion K bestimmt die Auswerteeinheit 21 über die Gleichung (1a), die Gleichung (1 b) und die Gleichung (2) die Strömungsgeschwindigkeit V, den Volumendurchfluss Q und die Schallgeschwindigkeit $C_g$ des Gasgemisches 2.

Die von dem Temperatursensor 35 und ggf. von dem Luftfeuchtesensor 15 gemessenen Ternperaturwerte bzw. Luftfeuchtewerte werden von dem Temperaturschaltkreis 20 bzw. dem Luftfeuchteschaltkreis 19 an die Auswerteeinheit 21 weitergeleitet. Die Auswerteeinheit 21 löst Gleichung (8), Gleichung (9), Gleichung (10) und Gleichung (11) und errechnet unter Verwendung der gemessenen Schallgeschwindigkeit $C_g$, der abgespeicherten Gaskonstanten R und der weiteren bekannten Größen die Volumenanteile der drei wesentlichen Komponenten des Gasgemisches. Weiterhin stellt die Auswerteeinheit 21 Information über den Volumendurchfluss der einzelnen Komponenten des Gasgemisches 2 zur Verfügung. Die Werte werden auf der Anzeigeeinheit 22 angezeigt oder über entsprechende Verbindungsleitungen an eine übergeordnete Prozessleitstelle geführt.

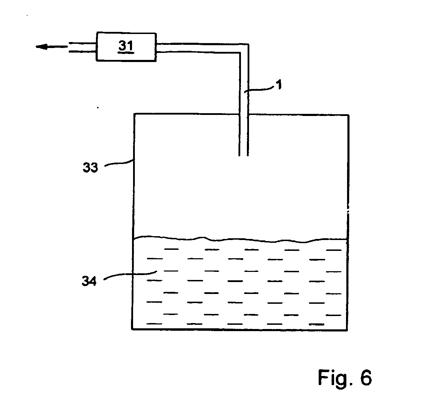

Fig. 6 zeigt die Anordnung der erfindungsgemäß verwendeten Vorrichtung an einem Fermenter 33 in einer Anlage zur Erzeugung von Biogas. In dem Fermenter 33 befindet sich das Befüllmaterial 34. Hierbei handelt es sich um organische Stoffe, insbesondere um Speisereste, Silageeintrag und Jauche. Der Fermentationsprozess erfolgt bei einer vorgegebenen Temperatur. Das gewonnene Biogas wird über das Ableitrohr 1 in einen in Fig. 6 nicht gesondert dargestellten Gasspeicher geleitet. In dem Ableitrohr 1 ist das Ultraschall-Durchflussmessgerät 31 montiert.

Bevorzugt ermittelt die Auswerteeinheit 21 den Energiefluss bzw. die Energieproduktion des Biogases unter Berücksichtigung der ermittelten Konzentration der einzelnen Komponenten und der Strömungsgeschwindigkeit V des Biogases in der Rohrleitung 1. Eine Meldung wird ausgegeben, wenn der Energiefluss bzw. die Energieproduktion des Biogases einen vorgegebenen minimalen Grenzwert unterschreitet.

Die Regel-/Auswerteeinheit 21 stellt Regelgrößen zur Verfügung, über die die Temperatur in dem Fermenter 33 und/oder die Beschickung des Fermenters 33 mit Füllmaterial 34 geregelt wird. Insbesondere wird der Fermentationsprozess in dem Fermenter 33 so gesteuert, dass der Energiefluss bzw. die Energieproduktion des Biogases einen im wesentlichen konstanten Wert annimmt. Hierdurch lässt sich der Ablauf des Fermentationsprozesses optimieren.

Besteht die Anlage zur Erzeugung von Biogas aus einer Vielzahl von Fermentern 33, so regelt die erfindungsgemäß verwendete Vorrichtung 31 die Temperatur von jedem einzelnen Fermenter 33 und/oder die Beschickung jeden einzelnen Fermenters 33 mit Füllmaterial 34 derart, dass der Energiefluss bzw. die Energieproduktion des von der Anlage erzeugten Biogases einen im wesentlichen konstanten Wert annimmt. Hierdurch wird gleichfalls eine Optimierung des Prozessablaufs in der Biogas-Anlage erreicht.

## Bezugszeichenliste

| | |
|---|---|
| 1 | Rohrleitung / Messrohr /Ableitrohr |
| 2 | Gasgemisch / Biogas |
| 3 | Montagestutzen |
| 4 | Ultraschallsensor mit Temperatursensor |
| 5 | Ultraschallsensor |
| 6 | Sensorhalterung |
| 7 | Temperatur- und Luftfeuchtesensor |
| 8 | Verbindungskabel |
| 9 | Koaxialkabel |
| 10 | Schweißnaht |
| 11 | Füllmaterial |
| 12 | Temperatursensor |
| 13 | Piezoelektrisches Element |
| 14 | Anpassschicht |
| 15 | Luftfeuchtesensor |
| 16 | Fritte |
| 17 | Längsachse der Rohrleitung / des Messrohrs |
| 18 | Regel-/Auswerteeinheit / Transmitter |
| 19 | Schaltkreis für die Luftfeuchtemessung |
| 20 | Schaltkreis für die Temperaturmessung |
| 21 | Auswerteeinheit |
| 22 | Anzeige-/Ausgabeeinheit |
| 23 | Signalerzeugung / Generator |
| 24 | A/D Wandler |
| 25 | Verstärker für den Sender |
| 26 | Verstärker für den Empfänger |
| 27 | Multiplexer |
| 28 | Verbindungsleitung |
| 29 | Verbindungsleitung |
| 30 | Rückkoppelkreis |
| 31 | Ultraschall-Durchflussmessgerät |
| 32 | Drucksensor |
| 33 | Fermenter |
| 34 | Füllmaterial / Biomaterial |
| 35 | Temperatursensor |

## Patentansprüche

1. Verwendung einer Vorrichtung in einer Anlage zur Erzeugung von Biogas, wobei ein Ultraschall-Durchflussmessgerät (31) vorgesehen ist, mittels welchem die Schallgeschwindigkeit ($C_g$) des in einer Rohrleitung (1) strömenden Gasgemisches (2) bestimmbar ist,
wobei eine Temperaturmesseinheit (12) vorgesehen ist, mittels welcher die Temperatur (T) des in der Rohrleitung (1) strömenden Gasgemisches (2) bestimmbar ist,

wobei eine Feuchtemesseinheit (15) vorgesehen ist, mittels welcher die relative Luftfeuchte (RH) des in der Rohrleitung (1) strömenden Gasgemisches (2) messbar ist und

wobei eine Auswerteeinheit (21) vorgesehen ist, mittels welcher anhand der über eine Ultraschall messung ermittelten Schallgeschwindigkeit ($C_g$) und anhand der Schallgeschwindigkeit ($C_g$), die sich durch Auswertung der idealen Gasgleichung ergibt, mit

$$C_g = \sqrt{\frac{\gamma RT}{\overline{M}}} \quad,$$

wobei

$$\overline{\gamma} = 1 + \left[ \frac{x_1}{\gamma_1 - 1} + \frac{x_2}{\gamma_2 - 1} + \frac{x_3}{\gamma_3 - 1} \right]^{-1}$$

und

$$\overline{M} = x_1 M_1 + x_2 M_2 + x_3 M_3,$$

wobei $\gamma_1, \gamma_2, \gamma_3$ die spezifischen Wärmekapazitätsverhältnisse von drei Komponenten eines Gasgemisches sind, wobei $M_1, M_2, M_3$ die Molekulargewichte von drei Komponenten des Gasgemisches sind, die Konzentrationen ($x_1, x_2, x_3$) der Komponenten des Gasgemisches (2) bestimmbar sind, wobei mittels der Auswerteeinheit (21) die Konzentration des Wasserdampfs ($x_3$) in Abhängigkeit von der Temperatur (T) und der gemessenen relativen Luftfeuchte (RH) des Gasgemisches (2) ermittelbar ist und die Konzentration ($x_3$) des Wasserdampfes bei der Bestimmung der Konzentrationen ($x_1, x_2$) der beiden weiteren Komponenten berücksichtigbar sind,

zur Bestimmung der Konzentrationen ($x_1, x_2, x_3$) von Komponenten eines Gasgemisches (2), das durch eine Rohrleitung (1) strömt, wobei es sich bei dem Gasgemisch (2) um ein Biogas handelt, welches sich im Wesentlichen aus den drei Komponenten Methan, Kohlendioxid und Wasserdampf zusammensetzt.

2. Verwendung einer Vorrichtung in einer Anlage zur Erzeugung von Biogas, wobei ein Ultraschall-Durchflussmessgerät (31) vorgesehen ist, mittels welchem die Schallgeschwindigkek ($C_g$) des in einer Rohrleitung (1) strömenden Gasgemisches (2) bestimmbar ist,

wobei eine Temperaturmesseinheit (12) vorgesehen ist, mittels welcher die Temperatur (T) des in der Rohrleitung (1) strömenden Gasgemisches (2) bestimmbar ist,

und

wobei eine Auswerteeinheit (21) vorgesehen ist, mittels welcher anhand der über eine Ultraschallmessung ermittelten Schallgeschwindigkeit ($C_g$) und anhand der Schallgeschwindigkeit ($C_g$), die sich durch Auswertung der idealen Gasgleichung ergibt, mit

$$C_g = \sqrt{\frac{\gamma RT}{\overline{M}}} \quad,$$

wobei

$$\overline{\gamma} = 1 + \left[ \frac{x_1}{\gamma_1 - 1} + \frac{x_2}{\gamma_2 - 1} + \frac{x_3}{\gamma_3 - 1} \right]^{-1}$$

und

$$\overline{M} = x_1 M_1 + x_2 M_2 + x_3 M_3,$$

wobei $\gamma_1, \gamma_2, \gamma_3$ die spezifischen Wärmekapazitätsverhältnisse von drei Komponenten eines Gasgemisches sind, wobei $M_1, M_2, M_3$ die Molekulargewichte von drei Komponenten des Gasgemisches sind, die Konzentrationen ($x_1, x_2, x_3$) der Komponenten des Gasgemisches (2) bestimmbar sind, wobei die Auswerteeinheit (21) die Konzentration($x_3$) des Wasserdampfes in Abhängigkeit von der Temperatur (T) unter der Annahme einer relativen Luftfeuchte (RH) von 100% ermittelt, und wobei mittels der Auswerteeinheit (21) die Konzentration des Wasserdampfs ($x_3$) in Abhängigkeit von der Temperatur (T) und der angenommenen relativen Luftfeuchte (RH) des Gasgemisches (2) ermittelbar ist und die Konzentration ($x_3$) des Wasserdampfes bei der Bestimmung der Konzentrationen ($x_1, x_2$) der beiden weiteren Komponenten berücksichtigbar sind, zur Bestimmung der Konzentrationen ($x_1, x_2, x_3$) von Komponenten eines Gasgemisches (2), das durch eine Rohrleitung (1) strömt, wobei es sich bei dem Gasgemisch (2) um ein Biogas handelt, welches sich im Wesentlichen aus den drei Komponenten Methan, Kohlendioxid und Wasserdampf zusammensetzt.

3. Verwendung nach Anspruch 1,
wobei ein Drucksensor (32) vorgesehen ist, der den Absolutdruck des in der Rohrleitung (1) strömenden Gasgemisches (2) bestimmt und
wobei die Auswerteeinheit (21) den gemessenen Absolutdruck bei der Bestimmung der Konzentration ($x_3$) des Wasserdampfes in dem Gasgemisch (2) berücksichtigt.

4. Verwendung nach einem oder mehreren der vorhergehenden Ansprüche, wobei das Ultraschall-Durchflussmessgerät (31) so ausgestaltet ist, dass es die Strömungsgeschwindigkeit des in der Rohrleitung (1) strömenden Gasgemisches (2) noch dem Doppler oder dem Laufzeitdifferenz-Prinzip ermittelt.

5. Verwendung nach Anspruch 4,
wobei die Auswerteeinheit (21) anhand der ermittelten Konzentrationen ($x_1, x_2, x_3$) und der Molekulargewichte ($M_1, M_2, M_3$) der einzelnen Komponenten des Gasgemisches (2) und anhand der ermittelten Strömungsgeschwindigkeit den Volumen- oder Massedurchfluss (Q) von zumindest einer der Komponenten des Gasgemisches (2) ermittelt.

6. Verwendung nach Anspruch 4 oder 5,
wobei die Auswerteeinheit den Energiefluss bzw. die Energieproduktion des Gasgemisches unter Berücksichtung der ermittelten Konzentration ($x_1, x_2, x_3$) der einzelnen Komponenten und der Strömungsgeschwindigkeit des Gasgemisches (2) in der Rohrleitung (1) ermittelt und bereitstellt.

7. Verwendung nach Anspruch 6,
wobei eine Anzeigeeinheit (22) vorgesehen ist, die eine Meldung ausgibt, wenn der Energiefluss bzw. die Energieproduktion des Gasgemisches (2) einen vorgegebenen minimalen Grenzwert unterschreitet.

8. Verwendung Anspruch 6, wobei die Vorrichtung in einer Anlage zur Erzeugung von Biogas verwendet wird,
wobei eine Steuer/Regeleinheit (18) vorgesehen ist, welche die Temperatur (T) in einem Fermenter und/oder die Beschickung des Fermenters mit Füllmaterial (34) so steuert, dass der Energiefluss bzw. die Energieproduktion (P) des Gasgemisches (2) einen im wesentlichen konstanten Wert annimmt.

9. Verwendung nach Anspruch 1, wobei die Vorrichtung in einer Anlage zur Erzeugung von Biogas verwendet wird,
wobei die Anlage zur Erzeugung von Biogas (2) aus einer Vielzahl von Fermentern (33) besteht und
wobei eine Steuer-/Regeleinheit (18) die Temperatur von jeden einzelnen Fermenters (33) und/oder die Beschickung jedes einzelnen Fermenters (33) mit Füllmaterial (34) so steuert, dass der Energiefluss bzw. die Energieproduktion (P) des von der Anlage erzeugten Biogases (2) einen im wesentlichen konstanten Wert annimmt.

10. Verwendung nach Anspruch 1, wobei die Vorrichtung in einer Anlage zur Erzeugung von Biogas verwendet wird, wobei es sich bei der Rohrleitung (1) um ein Ableitrohr für das Gasgemisch (2) handelt, und wobei die Rohrleitung (1) im oberen Bereich eines Fermenters (33), in den Biomaterial (34) eingefüllt ist, angeordnet ist.

11. Verfahren zur Bestimmung der Konzentrationen ($x_1,x_2,x_3$) von gasförmigen Komponenten eines Gasgemisches (2), das durch eine Rohrleitung (1) strömt, wobei es sich bei dem Gasgemisch (2) um ein Biogas handelt, welches sich im Wesentlichen aus den drei Komponenten Methan, Kohlendioxid und Wasserdampf zusammensetzt, wobei die Schallgeschwindigkeit ($C_g$) des in einer Rohrleitung (1) strömenden Gasgemisches (2) über ein Ultraschall-Messverfahren bestimmt wird, wobei die Temperatur (T) des in der Rohrleitung (1) strömenden Gasgemisches (2) bestimmt wird, wobei die relative Luftfeuchte (RH) des in der Rohrleitung (1) strömenden Gasgemisches (2) gemessen oder wobei eine relative Luftfeuchte RH 100% angenommen wird, wobei die Konzentration ($x_3$) des Wasserdampfs in Abhängigkeit von der Temperatur (T) bei der in der Rohrleitung (1) herrschenden, gemessenen oder angenommenen relativen Luftfeuchte (RH) ermittelt wird, und wobei anhand der über das Ultraschall-Messverfahren ermittelten Schallgeschwindigkeit ($C_g$) und anhand der Schallgeschwindigkeit ($C_g$), die sich durch Auswertung der idealen Gasgleichung ergibt, mit

$$C_g = \sqrt{\frac{\gamma RT}{\overline{M}}} \quad ,$$

wobei

$$\overline{\gamma} = 1 + \left[ \frac{x_1}{\gamma_1 - 1} + \frac{x_2}{\gamma_2 - 1} + \frac{x_3}{\gamma_3 - 1} \right]^{-1}$$

und

$$\overline{M} = x_1 M_1 + x_2 M_2 + x_3 M_3,$$

wobei $\gamma_1,\gamma_2,\gamma_3$ die spezifischen Wärmekapazitätsverhättnisse von drei Komponenten eines Gasgemisches sind, wobei $M_1,M_2,M_3$ die Molekulargewichte von drei Komponenten des Gasgemisches sind, die Konzentrationen ($x_1,x_2$) der Komponenten der beiden weiteren Komponenten des Gasgemischs (2) bestimmt werden.

12. Verfahren nach Anspruch 11, wobei der Energiefluss bzw. die Energieproduktion (P) des Gasgemisches (2) unter Berücksichtigung der Konzentrationen ($x_1,x_2,x_3$) der einzelnen Komponenten und des Volumen- oder Massedurchflusses (Q) durch die Rohrleitung (1) bestimmt wird.

**Claims**

1. Use of a unit in a system designed for the generation of biogas, wherein an ultrasonic flowmeter (31) is provided via which the sound velocity ($c_g$) of the gas mixture (2) flowing through a pipe (1) can be determined, wherein a temperature measuring unit (12) is provided via which the temperature (T) of the gas mixture (2) flowing through the pipe (1) can be determined,

wherein a humidity meter (15) is provided via which the relative humidity (RH) of the gas mixture (2) flowing through the pipe (1) can be determined and

wherein an evaluation unit (21) is provided via which it is possible to determine the concentrations ($x_1$, $x_2$, $x_3$) of the components of the gas mixture (2) on the basis of the sound velocity ($c_g$) determined via an ultrasonic measurement and on the basis of the sound velocity ($c_g$), which results from the evaluation of the ideal gas equation, with

$$C_g = \text{square root } (\gamma RT)/M \; ,$$

where

$$\gamma = 1 + [(x_1/\gamma_1 - 1) + (x_2/\gamma_2 - 1) + (x_3/\gamma_3 - 1)]^{-1}$$

and

$$M = x_1 M_1 + x_2 M_2 + x_3 M_3,$$

wherein $\gamma_1$, $\gamma_2$, $\gamma_3$ are the specific heat capacity ratios of three components of a gas mixture, wherein $M_1$, $M_2$, $M_3$ are the molecular weights of three components of the gas mixture (2), wherein it is possible to determine the concentration of the water vapor ($x_3$) as a function of the temperature (T) and the measured relative humidity (RH) of the gas mixture (2) using the evaluation unit (21) and the concentration ($x_3$) of the water vapor can be factored in when determining the concentrations ($x_1$, $x_2$) of the other two components with a view to determining the concentrations ($x_1$, $x_2$, $x_3$) of the components of a gas mixture (2), which flows through a pipe (1), wherein the gas mixture (2) is a biogas essentially made up of three components: methane, carbon dioxide and water vapor.

2. Use of a unit in a system designed for the generation of biogas, wherein an ultrasonic flowmeter (31) is provided via which the sound velocity ($c_g$) of the gas mixture (2) flowing through a pipe (1) can be determined, wherein a temperature measuring unit (12) is provided via which the temperature (T) of the gas mixture (2) flowing through the pipe (1) can be determined and

wherein an evaluation unit (21) is provided via which it is possible to determine the concentrations ($x_1$, $x_2$, $x_3$) of the components of the gas mixture (2) on the basis of the sound velocity ($c_g$) determined via an ultrasonic measurement and on the basis of the sound velocity ($c_g$), which results from the evaluation of the ideal gas equation, with

$$C_g = \text{square root } (\gamma RT)/M \; ,$$

where

$$\gamma = 1 + [(x_1/\gamma_1 - 1) + (x_2/\gamma_2 - 1) + (x_3/\gamma_3 - 1)]^{-1}$$

and

$$M = x_1 M_1 + x_2 M_2 + x_3 M_3,$$

wherein $\gamma_1$, $\gamma_2$, $\gamma_3$ are the specific heat capacity ratios of the three components of a gas mixture, wherein $M_1$, $M_2$, $M_3$ are the molecular weights of three components of the gas mixture , wherein the evaluation unit (21) determines the concentration ($x_3$) of the water vapor as a function of the temperature (T) assuming a relative humidity (RH) of 100%, and wherein via the evaluation unit (21) the concentration of the water vapor ($x_3$) can be determined as a function of the temperature (T) and the assumed relative humidity (RH) of the gas mixture (2) and it is possible to factor in the concentration ($x_3$) of the water vapor when determining the concentrations ($x_1$, $x_2$) of the two other components, with a view to determining the concentrations ($x_1$, $x_2$, $x_3$) of components of a gas mixture (2), which flows through a pipe (1), wherein the gas mixture (2) is a biogas essentially made up of three components: methane, carbon dioxide and water vapor.

**3.** Use as claimed in Claim 1,
wherein a pressure sensor (32) is provided which determines the absolute pressure of the gas mixture (2) flowing through the pipe (1) and wherein the evaluation unit (21) factors in the measured absolute pressure when determining the concentration ($x_3$) of the water vapor in the gas mixture (2).

**4.** Use as claimed in one or more of the previous claims,
wherein the ultrasonic flowmeter (21) is designed in such a way that it determines the flow velocity of the gas mixture (2) flowing through the pipe (1) based on the Doppler principle or the principle of the difference of transit time.

**5.** Use as claimed in Claim 4,
wherein the evaluation unit (21) determines the volume flow or mass flow (Q) of at least one of the components of the gas mixture (2) using the determined concentrations ($x_1$, $x_2$, $x_3$) and the molecular weights ($M_1$, $M_2$, $M_3$) of the individual components of the gas mixture (2) and using the determined flow velocity.

**6.** Use as claimed in Claim 4 or 5,
wherein the evaluation unit determines and provides the energy flow or the energy production of the gas mixture taking into consideration the determined concentration ($x_1$, $x_2$, $x_3$), of the individual components and the flow velocity of the gas mixture (2) in the pipe (1).

**7.** Use as claimed in Claim 6,
wherein a display unit (22) is provided which displays a message when the energy flow or the energy production of the gas mixture (2) drops below a specified minimum limit value.

**8.** Use as claimed in Claim 6,
wherein the unit is used in a system for the generation of biogas,
wherein a control/regulation unit (18) is provided which controls the temperature (T) in a fermenter and/or the supply of filling material (34) to the fermenter in such a way that the energy flow or the energy production (P) of the gas mixture (2) adopts an essentially constant value.

**9.** Use as claimed in Claim 1,
wherein the unit is used in a system for the generation of biogas,
wherein the system designed for the generation of biogas (2) consists of a variety of fermenters (33) and
wherein a control/regulation unit (18) controls the temperature of each individual fermenter (33) and/or the supply of filling material (34) to each individual fermenter (33) in such a way that the energy flow or the energy production (P) of the biogas (2) generated by the plant adopts an essentially constant value.

**10.** Use as claimed in Claim 1,
wherein the unit is used in a plant for the generation of biogas,
wherein the pipe (1) is a drain pipe for the gas mixture (2), and
wherein the pipe (1) is arranged in the upper area of a fermenter (33) into which biomaterial (34) is poured.

**11.** Procedure to determine the concentrations ($x_1$, $x_2$, $x_3$) of gaseous components of a gas mixture (2) which flows through a pipe (1), wherein the gas mixture (2) is a biogas which essentially consists of three components: methane, carbon dioxide and water vapor, wherein the sound velocity ($C_g$) of the gas mixture (2) flowing through a pipe (1) is determined via an ultrasonic measurement process,
wherein the temperature (T) of the gas mixture (2) flowing through the pipe (1) is determined,
wherein the relative humidity (RH) of the gas mixture (2) flowing through the pipe (1) is measured or wherein a relative humidity (RH) of 100% is presumed,
wherein the concentration ($x_3$) of the water vapor is determined as a function of the temperature (T) at the level of relative humidity (RH) which is present, measured or assumed in the pipe (1), and wherein the concentrations ($x_1$, $x_2$, $x_3$) of the components of the other two components of the gas mixture (2) are determined on the basis of the sound velocity ($c_g$) determined via an ultrasonic measurement and on the basis of the sound velocity ($c_g$) determined via the ultrasonic measuring process and on the basis of the sound velocity ($c_g$) that results from the evaluation of the ideal gas equation, with

$$C_g = \text{square root } (\gamma RT)/M \quad,$$

where

$$\gamma = 1 + [(x_1/\gamma_1-1) + (x_2/\gamma_2-1) + (x_3/\gamma_3-1)]^{-1}$$

and

$$M = x_1M_1 + x_2M_2 + x_3M_3,$$

wherein $\gamma_1$, $\gamma_2$, $\gamma_3$ are the specific heat capacity ratios of three components of a gas mixture,
wherein $M_1$, $M_2$, $M_3$ are the molecular weights of three components of the gas mixture (2)

12. Procedure as claimed in Claim 11,
wherein the energy flow or the energy production (P) of the gas mixture (2) is determined taking into consideration the concentrations ($x_1$, $x_2$, $x_3$) of the individual components and the volume flow or mass flow (Q) through the pipe (1).

## Revendications

1. Utilisation d'un dispositif dans une installation destinée à la production de biogaz, pour lequel est prévu un débitmètre à ultrasons (31), au moyen duquel peut être déterminée la vitesse du son ($c_g$) du mélange gazeux (2) s'écoulant dans une conduite (1),
pour lequel est prévue une unité de mesure de température (12), au moyen de laquelle peut être déterminée la température (T) du mélange gazeux (2) s'écoulant dans la conduite (1),
pour lequel est prévue une unité de mesure d'humidité (15), au moyen de laquelle peut être mesurée l'humidité relative de l'air (RH) du mélange gazeux (2) s'écoulant dans la conduite (1) et
pour lequel est prévue une unité d'évaluation (21), au moyen de laquelle peuvent être déterminées - sur la base de la vitesse du son ($c_g$) déterminée par le biais d'une mesure par ultrasons et sur la base de la vitesse du son ($c_g$), qui résulte de l'évaluation de l'équation des gaz idéale, avec

$$C_g = \text{racine carrée } (\gamma RT)/M \quad,$$

où

$$\gamma = 1 + [(x_1/\gamma_1-1) + (x_2/\gamma_2-1) + (x_3/\gamma_3-1)]^{-1}$$

et

$$M = x_1M_1 + x_2M_2 + x_3M_3,$$

où $\gamma_1$, $\gamma_2$, $\gamma_3$ sont les rapports de capacité de chaleur spécifiques de trois composants d'un mélange gazeux,
où $M_1$, $M_2$, $M_3$ sont les poids moléculaires de trois composants d'un mélange gazeux - les concentrations ($x_1$, $x_2$, $x_3$) des composants du mélange gazeux (2),
la concentration de la vapeur d'eau ($x_3$) fonction de la température (T) et de l'humidité relative de l'air (RH) du mélange gazeux (2) pouvant être déterminée au moyen de l'unité d'évaluation (21) et la concentration de la vapeur d'eau ($x_3$) pouvant être prise en compte pour la détermination des concentrations ($x_1$, $x_2$) des deux autres composants,
en vue de la détermination des concentrations ($x_1$, $x_2$, $x_3$) de composants d'un mélange gazeux (2), qui s'écoule à travers une conduite (1), où concernant le mélange gazeux (2) il s'agit d'un biogaz, lequel se compose pour l'essentiel de trois composants, à savoir le méthane, le dioxyde de carbone et la vapeur d'eau.

2. Utilisation d'un dispositif dans une installation destinée à la production de biogaz, pour lequel est prévu un débitmètre à ultrasons (31), au moyen duquel peut être déterminée la vitesse du son ($c_g$) du mélange gazeux (2) s'écoulant dans une conduite (1),

pour lequel est prévue une unité de mesure de température (12), au moyen de laquelle peut être déterminée la température (T) du mélange gazeux (2) s'écoulant dans la conduite (1),
et

pour lequel est prévue une unité d'évaluation (21), au moyen de laquelle peuvent être déterminées - sur la base de la vitesse du son ($c_g$) déterminée par le biais d'une mesure par ultrasons et sur la base de la vitesse du son ($c_g$), qui résulte de l'évaluation de l'équation des gaz idéale, avec

$$C_g = \text{racine carrée } (\gamma RT)/M \quad,$$

où

$$\gamma = 1 + [(x_1/\gamma_1-1) + (x_2/\gamma_2-1) + (x_3/\gamma_3-1)]^{-1}$$

et

$$M = x_1M_1 + x_2M_2 + x_3M_3,$$

où $\gamma_1$, $\gamma_2$, $\gamma_3$ sont les rapports de capacité de chaleur spécifiques de trois composants d'un mélange gazeux,
où $M_1$, $M_2$, $M_3$ sont les poids moléculaires de trois composants d'un mélange gazeux - les concentrations ($x_1$, $x_2$, $x_3$) des composants du mélange gazeux (2),
l'unité d'évaluation (21) déterminant la concentration ($x_3$) de la vapeur d'eau en fonction de la température (T) en supposant une humidité relative de l'air (RH) de 100 %, et
la concentration de la vapeur d'eau ($x_3$) en fonction de la température (T) et de l'humidité relative de l'air (RH) supposée du mélange gazeux (2) pouvant être déterminée au moyen de l'unité d'évaluation (21) et la concentration de la vapeur d'eau ($x_3$) pouvant être prise en compte pour la détermination des concentrations ($x_1$, $x_2$) des deux autres composants,
en vue de la détermination des concentrations ($x_1$, $x_2$, $x_3$) de composants d'un mélange gazeux (2), qui s'écoule à travers une conduite (1), où concernant le mélange gazeux (2) il s'agit d'un biogaz, lequel se compose pour l'essentiel de trois composants, à savoir le méthane, le dioxyde de carbone et la vapeur d'eau.

3. Utilisation selon la revendication 1,
pour laquelle est prévu un capteur de pression (32), lequel détermine la pression absolue du mélange gazeux (2) s'écoulant dans la conduite (1) et
pour laquelle l'unité d'évaluation (21) prend en compte la pression absolue mesurée pour la détermination de la concentration ($x_3$) de la vapeur d'eau dans le mélange gazeux (2).

4. Utilisation selon une ou plusieurs des revendications précédentes,
pour laquelle le débitmètre à ultrasons (21) est conçu de telle sorte qu'il détermine la vitesse d'écoulement du mélange gazeux (2) s'écoulant dans la conduite (1) d'après le principe de Doppler ou de la différence des temps de propagation.

5. Utilisation selon la revendication 4,
pour laquelle l'unité d'évaluation (21) détermine, au moyen des concentrations ($x_1$, $x_2$, $x_3$) et des poids moléculaires ($M_1$, $M_2$, $M_3$) des différents composants du mélange gazeux (2) et au moyen de la vitesse d'écoulement déterminée, le débit volumique ou massique (Q) d'au moins l'un des composants du mélange gazeux (2).

6. Utilisation selon la revendication 4 ou 5,
pour laquelle l'unité d'évaluation détermine et met à disposition le flux énergétique ou la production énergétique du mélange gazeux en tenant compte de la concentration ($x_1$, $x_2$, $x_3$) déterminée des différents composants et de la vitesse d'écoulement du mélange gazeux (2) dans la conduite (1).

7. Utilisation selon la revendication 6,
   pour laquelle est prévue une unité d'affichage (22), laquelle émet un message lorsque le flux énergétique ou la production énergétique du mélange gazeux (2) parvient sous un seuil minimal prédéfini.

8. Utilisation selon la revendication 6,
   pour laquelle le dispositif est utilisé dans une installation destinée à la production de biogaz,
   pour laquelle est prévue une unité de commande / régulation (18), laquelle pilote la température (T) dans un fermenteur et/ou l'alimentation du fermenteur avec un matériau de remplissage (34), de telle sorte que le flux énergétique ou la production énergétique (P) du mélange gazeux (2) adopte pour l'essentiel une valeur constante.

9. Utilisation selon la revendication 1,
   pour laquelle le dispositif est utilisé dans une installation destinée à la production de biogaz,
   pour laquelle l'installation destinée à la production de biogaz (2) est constituée d'un grand nombre de fermenteurs (33) et
   pour laquelle est prévue une unité de commande / régulation (18), laquelle pilote la température de chaque fermenteur (33) individuel et/ou l'alimentation de chaque fermenteur (33) individuel avec un matériau de remplissage (34), de telle sorte que le flux énergétique ou la production énergétique (P) du biogaz (2) produit dans l'installation adopte pour l'essentiel une valeur constante.

10. Utilisation selon la revendication 1,
    pour laquelle le dispositif est utilisé dans une installation destinée à la production de biogaz,
    pour laquelle il s'agit, concernant la conduite (1), d'un tube d'évacuation pour le mélange gazeux (2), et
    pour laquelle la conduite (1) est disposée dans la zone supérieure d'un fermenteur (33), dans lequel est remplie un biomatériau (34).

11. Procédé destiné à la détermination des concentrations ($x_1$, $x_2$, $x_3$) de composants gazéiformes d'un mélange gazeux (2), qui s'écoule à travers une conduite (1), pour lequel il s'agit, concernant le mélange gazeux (2), d'un biogaz, lequel se compose pour l'essentiel de trois composants, à savoir le méthane, le dioxyde de carbone et la vapeur d'eau, pour lequel la vitesse du son ($C_g$) du mélange gazeux (2) s'écoulant dans une conduite (1) est déterminée par le biais d'un procédé de mesure à ultrasons,
    pour lequel est déterminée la température (T) du mélange gazeux (2) s'écoulant dans la conduite (1),
    pour lequel est mesurée l'humidité relative de l'air (RH) du mélange gazeux (2) s'écoulant dans la conduite (1), ou pour lequel est supposée une humidité relative de l'air (RH) de 100 %,
    pour lequel est déterminée la concentration ($x_3$) de la vapeur d'eau en fonction de la température (T) pour l'humidité relative de l'air (RH), qui règne dans la conduite (1), qui est mesurée ou qui est supposée, et pour lequel sont déterminées - sur la base de la vitesse du son ($c_g$) déterminée par le biais d'une mesure par ultrasons et sur la base de la vitesse du son ($c_g$), qui résulte de l'évaluation de l'équation des gaz idéale, avec

$$C_g = \text{racine carrée } (\gamma RT)/M \quad ,$$

où

$$\gamma = 1 + [(x_1/\gamma_1-1) + (x_2/\gamma_2-1) + (x_3/\gamma_3-1)]^{-1}$$

et

$$M = x_1 M_1 + x_2 M_2 + x_3 M_3,$$

où $\gamma_1, \gamma_2, \gamma_3$ sont les rapports de capacité de chaleur spécifiques de trois composants d'un mélange gazeux,
où $M_1$, $M_2$, $M_3$ sont les poids moléculaires de trois composants d'un mélange gazeux - les concentrations ($x_1$, $x_2$)

des deux autres composants du mélange gazeux (2).

12. Procédé selon la revendication 11,
pour lequel le flux énergétique ou la production énergétique (P) du mélange gazeux (2) est déterminé en tenant compte des concentrations ($x_1$, $x_2$, $x_3$) des différents composants et du débit volumique ou massique (Q) à travers la conduite (1).

Fig. 1

Fig. 2

Fig. 3

Fig. 4

Fig. 5

EP 2 035 821 B1

Fig. 6

23

**IN DER BESCHREIBUNG AUFGEFÜHRTE DOKUMENTE**

**In der Beschreibung aufgeführte Patentdokumente**

- JP 2004325297 A
- WO 0108554 A
- WO 018554 A
- US PS5392635 A
- EP 0686255 B1
- US PS4484478 A
- DE 4335369 C1
- DE 29803911 U1
- DE 4336370 C1
- US PS4598593 A